# NEW EUROPEAN PATENT SPECIFICATION

(11) **EP 0 630 561 B2**
(45) Date of publication and mention of the opposition decision: **10.11.2004**
(45) Mention of the grant of the patent: 29.03.2000
(21) Application number: 94202067.8
(22) Date of filing: 15.01.1986
(51) Int. Cl.: A01J 7/00, A01K 13/00, A01J 7/04

(54) **A device for automatically milking animals**
Vorrichtung zum automatischen Melken von Tieren
Dispositif de traite automatique d'animaux

(30) Priority: 16.01.1985 NL 8500089; 16.01.1985 NL 8500090; 16.01.1985 NL 8500091
(43) Date of publication of application: 28.12.1994
(62) Divisional of application: 89107976.6
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 091 892
- US-A- 4 010 714

## Description

The invention relates to a device for automatically milking animals, such as cows, comprising a milking parlour and a computer-controlled milking unit with a milking cluster with teat cups which is automatically connectable to the teats of an animal to be milked, and a computer-controlled cleaning and/or drying unit for the teats of the animal.

Such a device is known from EP-A-0 091 892. For the purpose of obtaining a favourable arrangement of the milking unit and the cleaning and/or drying unit, the device is characterized by the features of the characterizing part of claim 1. In order to limit the freedom of movement of the animal, guide means may be provided in the milking parlour. The milking unit and the cleaning and/or drying unit may be located in their non-operative position outside an area bounded by the guide means. This construction permits an arrangement wherein the milking unit and the cleaning and/or drying unit are each supported by a support, the supports being mounted outside the area bounded by the guide means, particularly on the floor. In a specific embodiment the supports are mounted in such a way that the milking unit and the cleaning and/or drying unit can approach the udder of the animal from a side of the milking parlour between a foreleg and a hindleg of the animal.

Further, according to the invention, a support may comprise supporting arms hingeably connected to each other, one of said supporting arms further being hingeably connected to a height adjustable support member mounted on the floor. The supporting arms may be moved by means of a first, a second and a third electric motor. This third electric motor may cooperate with a spindle to realize the height adjustability of the supporting arms. All the said electric motors may be controlled by the computer.

For a better understanding of the invention an embodiment of the device for milking animals will now be described with reference to the accompanying drawing.
Figure 1 is a schematic cross-sectional view of a device for milking animals;
Figure 2 is a schematical view along line II - II of Figure 1;
Figure 3 is a schematic view of a cleaning and/or drying unit for the udder, which can be coupled automatically to the udder of the animal;
Figure 4 is a schematic view of a milking unit which can be coupled automatically to the udder of the animal;
Figure 5 shows schematically a side view along the line V - V of Figure 4;
Figure 6 shows schematically an installed device for milking animals; and
Figure 7 shows schematically a service vehicle for the device of Figure 6.

Corresponding components in the several figures are given the same reference numerals.

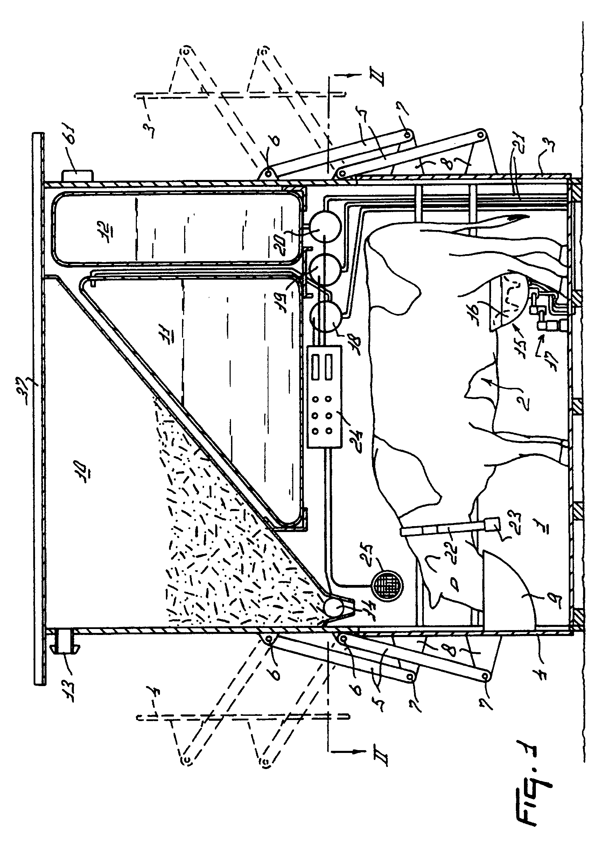

Figure 1 shows a device including a milking parlour 1 for the animal 2, this parlour 1 having a door 3 through which the animal 2 can enter the parlour and a door 4 through which the animal can leave the parlour 1. Both doors 3, 4 are connected such to the device that their orientation remains substantially the same during opening and closing. To that end a parallelogram structure is present, including guide rods 5 which are connected hingeably to the frame of the device by means of their ends 6 and whose other ends 7 are connected capable of hinging to the supports 8 provided on the door. Figure 1 shows the two doors 3, 4 in their closed positions, whilst the open position is illustrated by means of dotted lines. The use of a parallelogram structure for operating the doors 3, 4 has the advantage that only a limited space is required for opening of the doors. Both doors are operable with the aid of control members, not shown, such as hydraulic or pneumatic cylinders, which can be applied and operated in known manner. As is shown in Figure 1, a manger 9 is attached to the door 4 from which the animal 2 can eat concentrate or another kind of fodder during its a stay in the parlour 1. Because, on opening of the door 4, also the manger 9 is removed, the animal will tend to leave the box 1 earlier than otherwise.

Three storage containers 10, 11, 12 are shown over the milking parlour 1 for the animal 2. Storage container 10 is intended for fodder, for example concentrate, the animal can eat during its stay in the parlour 1. The storage container 10 has a fill opening 13 and a metering discharge outlet 14, which in answer to a control signal, feeds a predetermined quantity of fodder to the manger 9. The storage container 10 may be of such a construction that, as shown in Figure 1, the fodder can flow to the manger without any additional conveyor means.

Storage container 11 is intended for storing milk and for that purpose, can comprise means for cooling the milk stored in the container. Storage container 12 is intended to store a cleaning fluid, for example water, which can be used for cleaning, disinfecting and rinsing parts coming into contact with the milk, such as milk pipes, the milking cluster, the udder, or further parts eligible for cleaning or rinsing.

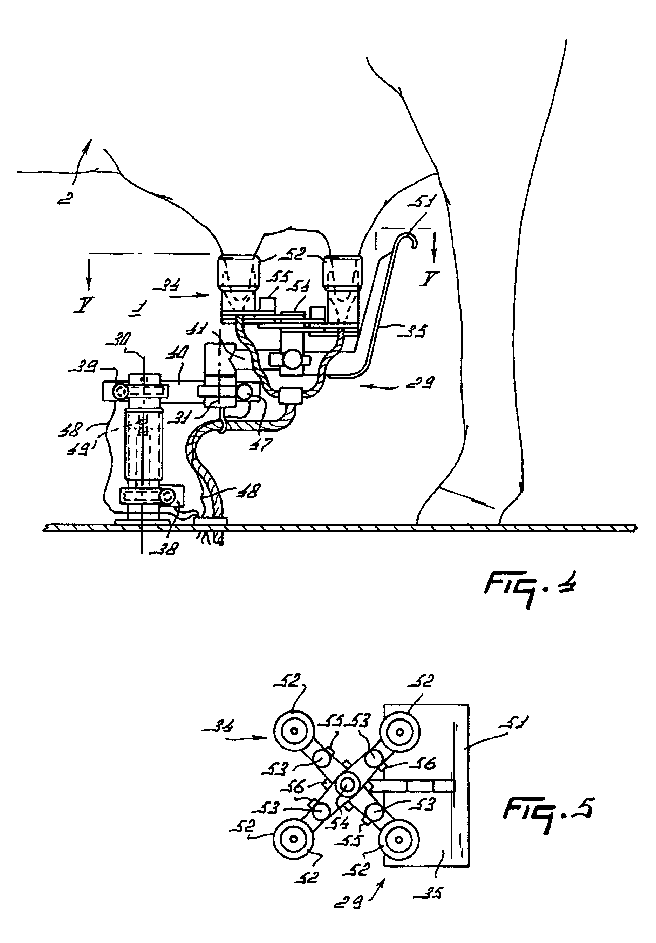

Figure 1 also shows a unit 15 which can be coupled to the udder of the animal 2. Unit 15 includes a bowl 16 which is in an almost close contact around the cow's udder and is supported in the centre by a support 17 which is attached to the floor and will be further described in the sequel with reference to Figure 3.

In addition, there is a device 18 for conveying milk to the storage tank 11. Device 19 has for its object to heat air and to convey that heated air to the udder-couplable device 15, as will be described in greater detail hereinafter. Using device 20, the detergent can be pumped from the storage container 12 to the udder-couplable arrangement 15. The conveyor conduits 21 required for this purpose are shown schematically.

A collar 22 is provided around the animal's neck, to which means 23 for identifying the animal are fastened. These means 23 may be constituted by an electronic or magnetic information carrier or a transmitter transmitting a signal which is specific to the given animal 2. Additonally, the device includes a computer 24 which controls the several functions of the device. For that purpose the computer 24 is connected to different portions of the device, which is illustrated in Figure 1 by means of lines.

The device further includes a loudspeaker 25 for producing sound or music so as to pass the desired signals on to the animal.

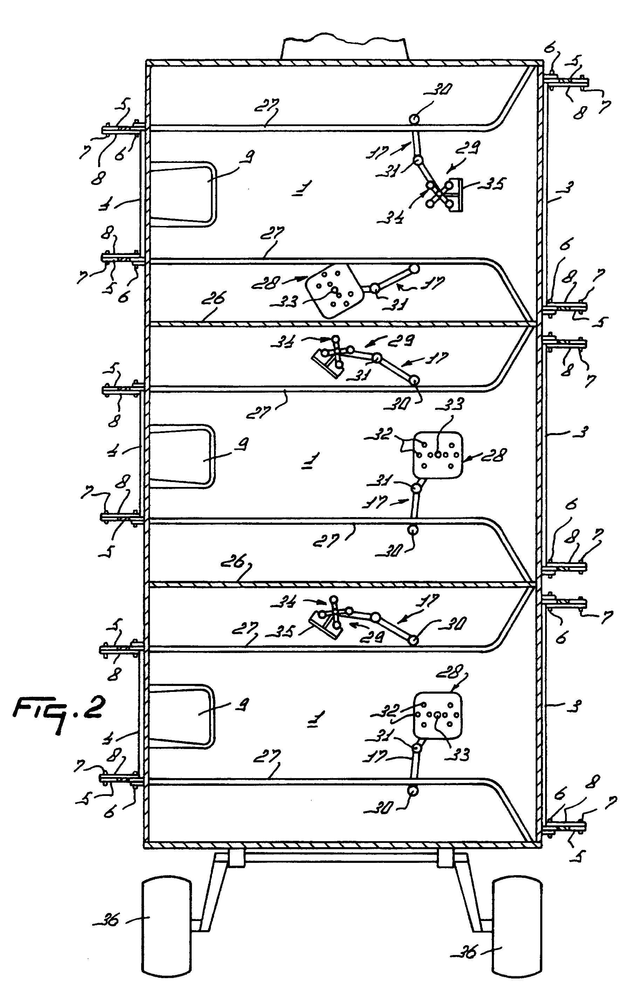

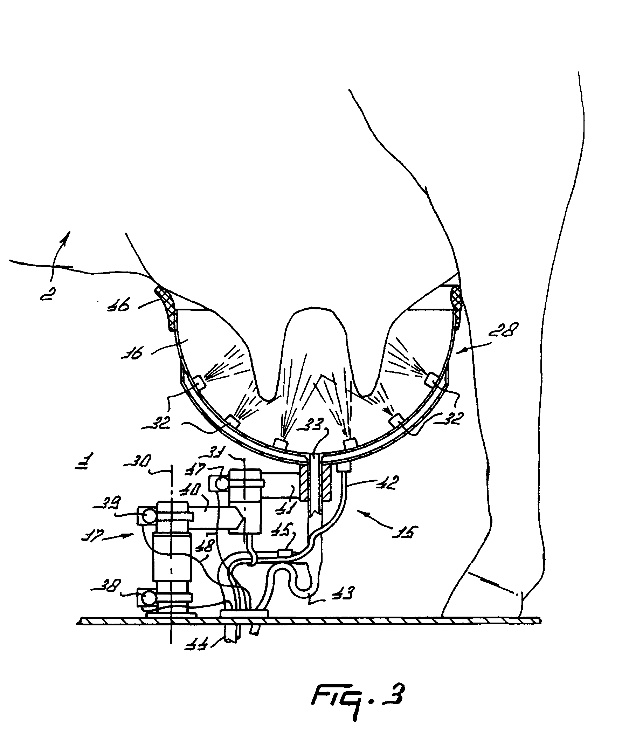

Figure 2 shows schematically three adjacent milking parlours 1, which are separated from each other by partitions 26. Furthermore guide means 27, constituted by, for example, rods are provided with the object of giving the animal only a limited freedom of movement. Figure 2 shows two types of devices couplable to the udder of the animal, namely a cleaning and/or drying unit 28 and a milking unit 29. These units 28, 29 may be in a non-operative position outside the area bounded by the guide means 27. When an animal is present in the milking parlour 1, unit 28 can be moved to under the animal from one side, whilst unit 29 can be moved to under the animal from the other side. Both units have a support including two substantially vertical hinge pins 30, 31, the support in the region of hinge pin 30 being fastened to the floor, so that the unit 28, 29 is capable of movement within a predetermined area. In addition, means are present for moving the units 28, 29 in the upward direction, as will be explained in greater detail hereinafter.

Unit 28 includes a bowl 16 (Figure 3) which is substantially in close contact around the animal's udder and has a plurality of spraying nozzles 32 for spraying a cleaning liquid against the animals udder, and a central aperture 33 for discharging used-up cleaning liquid and also for supplying air, which optionally may have been heated, with the object of drying the udder after cleaning.

Unit 29 includes a milking cluster 34 which is connectable to the teats of the udder and a shield 35, as will be explained in greater detail in the sequel.

The storage containers 10, 11 and 12 described in the foregoing, which can optionally be provided over the milking parlours 1, can extend over a plurality of boxes, whilst it is optionally alternatively possible to provide one or a plurality of storage containers for each parlour.

The described device for milking animals may be in the form of a mobile unit which can in its totality be positioned in a desired location. Optionally the device may be provided, for this purpose, with wheels 36 (Figure 2), or other means useful for moving the implement. So as to enable positioning of the device in the open air, it may be provided with a roof 37 extending along the overall device (Figure 1).

Figure 3 shows in greater detail the unit 28 already shown in Figure 2. The unit 28 includes a bowl 16 which can be moved to under the animal and around its udder by means of support 17. Support 17 is capable of swivelling around hinge pin 30, the support being fastened to the floor in the region of this hinge pin. The support includes a first electric motor 38 for moving the device 38 upwards, for example by means of a spindle arranged concentrically to pin 30. Additionally, a second electric motor 39 is provided, so that swivelling around pin 30 of the support can be effected. The support furthermore comprises a second, substantially vertical hinge pin 31 whereby connecting members 40 and 41 of the support are capable of swivelling relative to each other. At its end, the connecting member 41 bears the bowl 16, which is provided with spray nozzles 32 and a central aperture 33. The aperture 33 provided centrally in the bowl 16 is made in the spot where the connecting member 41 is connected to the bowl 16.

A liquid, for example warm water, can be applied to the spray nozzles 32 through conduit 42 by means of device 20 (Figure 1). The used-up liquid can be discharged through outlet 33 and conduit 43 to any place outside the milking device. So as to enable drying of the udders after cleaning, device 19 (Figure 1) can optionally apply warm air through conduit 44, which air is also passed to the udder through aperture 33.

So as to ensure that the air applied through conduit 44 and the liquid discharged through conduit 43 can not mutually affect each other, a non-return valve 45 is provided in the embodiment shown in Figure 3 in conduit 44, which valve passes the air current supplied, but constitutes a shut-off means for any liquid from the other direction. Additionally, conduit 43 is provided with an S-curve, so that a liquid lock is formed, to ensure that the air supplied through conduit 44 cannot flow away through conduit 43.

The milking device as shown in Figure 3 is computer-controlled, such that the bowl 16 first assumes an appropriate position in a substantially horizontal plane, whereafter the bowl is moved up, so that it is in a position around the udder of the animal. So as to facilitate this procedure, the edge of the bowl is provided with a strip 46 of a flexible material. The conduits 42, 43 and 44 must be adequately flexible to follow the motions of the bowl 16. As has already been described in the foregoing, moving the bowl is effected by a first electric motor 38, which can adjust the unit in the vertical direction, a second electric motor 39 being present for rotation around the pin 30 and a third electric motor being present for the mutual rotation of the connecting members 40 and 41 around the pin 31. To that end, the computer is connected to each one of said motors by means of electric connections 48.

Figure 4 shows the unit 29 (see Figure 2). The unit comprises a milking cluster having four teat cups 52. These teat cups 52 may be of a conventional structure, but they may alternatively be of somewhat more flaring construction to facilitate connection to the teats. The support shown in Figure 4 is of the same type as shown in, and described with reference to, Figure 3. Using the computer-controlled electric motors 38, 39 and 47, the milking cluster can be moved to any desired position to enable its connection to the udder. The spindle 49 for height adjustment of the unit is shown schematically.

At one side of the milking cluster the arrangement shown in Figure 4 is provided with a plate 35 having a folded edge 51 at its top. The plate 35 has for its object to provide a shield between the hind legs of the animal and the milking cluster, more specifically for preventing the milking cluster from being contaminated.

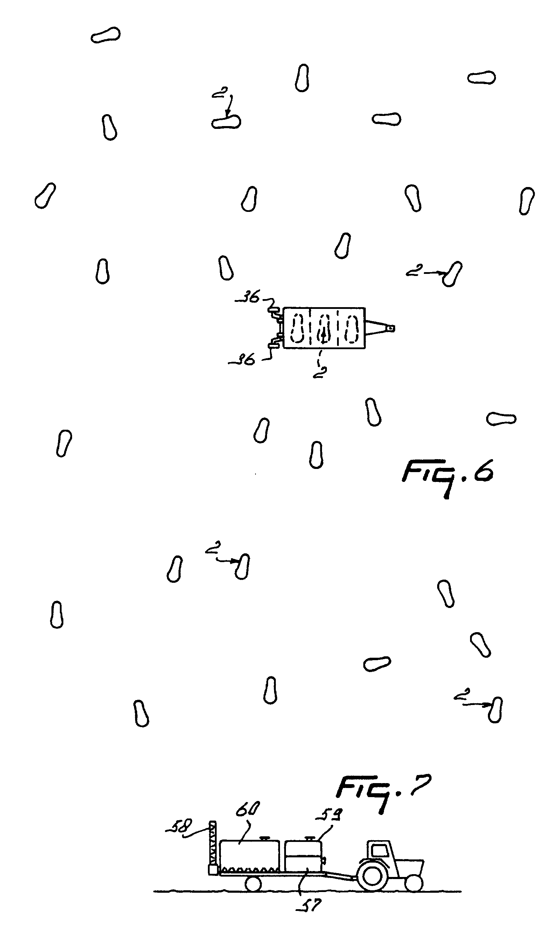

Figure 5 shows a side view along the line V-V of Figure 4, in which further details of the milking cluster are shown. In accordance with Figure 5, each teat cup 52 is connected, capably of hinging, to a central support 54, so that relative to the central support 54, each teat cup 52 is movable in a certain area. By means of small electric motors 55 and 56 each teat cup can be positioned relative to the central support 54 with the aid of the computer, so that the four teat cups 52, which together form the milking cluster, are arranged in a configuration which is adapted to the relevant animal.

Figure 6 shows schematically a mobile milking device comprising three milking parlours and being located in, for example, a meadow, so that animals 2, for example cows, walk around the implement.

Figure 7 shows a trailer placed behind a tractor, which trailer is provided with different storage containers 57, 59 and 60, for, for example, liquid, milk and fodder, respectively.

Using the tractor and trailer combination shown in Figure 7, a trip can be made to the milking device of Figure 6, with the object of collecting milk and of bringing fodder and liquid.

Although the device for milking animals can also be incorporated in any type of stable, the following description is based on a situation in which the milking device is installed in a meadow, as shown in Figure 6.

The animals walk freely around the automatic milking device. The object in mind is that all the animals make a more or less regular appearance in a milking parlour of the milking device, to be milked there. For that purpose the animals can be lured to the milking parlour by the presence of concentrate, it is however alternatively possible to call the animals by means of sound signals. To that end, each animal has a collar with a receiver attached thereto, which is connected to a loudspeaker located in the region of the animal's ears. In the milking device is computer-controlled, transmitter, so that the computer can convey a call signal through the loudspeaker of the relevant cow. Thus, each desired animal can be invited to go to the milking parlour by means of, for example, agreeable sounds, as the animal then knows that there is, for example, concentrate available. Simultaneously, the animals whose presence in the neighbourhood of the milking parlour is undesired, may be given an unpleasant signal as soon as they are too close near the milking parlour. Instead of radio signals, it is alternatively possible to use sound signals generated by means of a loudspeaker, denoted by 61 in Figure 1. Since also identifying means are fastened to the collar of the cow, for example a transmitter transmitting given signals, sensor means of the milking device will sense the presence of a certain animal, after door 3 (Figure 1) has been opened by the computer so as to allow admittance to the milking parlour for the relevant animal. Depending on that specific animal, the computer supplies a predetermined, metered quantity of concentrate to the manger and a device for cleaning the udders is coupled to the udders. Because the animal eats the fodder supplied, it is in a given position and the computer can control the units to be coupled to the udder in such a manner that they are coupled in the appropriate way. A drying operation can follow after a cleaning operation, whereafter the device coupled to the udder moves back to its starting position and the milking cluster can be moved to under the animal from the other side and be coupled to the udder, also controlled by the computer, the mutual positions of the teat cups having been adapted to the udder of the specific animal. After the milking cycle has been terminated, the milking cluster returns to its starting position, whereafter door 4 is opened and both the door and the manger are moved, so that the animal can leave the milking parlour. To enable correct coupling of the relevant unit to the udder, the computer has the disposition of the relevant data of each animal, on the basis of which data the units 28, 29 are controlled.

In connection with an optimal milk production it is of utmost importance that the animal feels comfortable in all situations or is even positively influenced. This influencing can be done by means of sounds produced by a loudspeaker 25 provided in the milking parlour wall (Figure 1). This loudspeaker can be used in the first place for luring the animal, by producing a sound pleasant to the animal, for example a certain type of music. During milking, this music can be varied such that it promotes the milk production, for example by starting slowly and gradually passing into a more dynamic form. The same loudspeaker 25 can be used to encourage the animal to leave the milking parlour, by, for example, producing unpleasant sounds, for example shrill sounds.

It will be clear that the animal can also be lured to the milking parlour in any other suitable way. It may also be advantageous to have the animal decide itself whether it wants to be milked, for which purpose the sensor means detect the presence of the relative animal, whereafter that animal is permitted to enter the milking parlour. Thus, it is possible to raise milking to very many times per day, depending on the own needs of the animal, which may be advantageous for the milk production.

It is of course alternatively possible to incorporate the milking arrangement in an open stable or in any other type of stable.

## Claims

1. A device for automatically milking animals, such as cows, comprising a milking parlour (1) and a computer controlled milking unit (29) with a milking cluster with teat cups (52) which is automatically connectable to the teats of an animal to be milked, and a computer controlled cleaning and/or drying unit (28) for the teats of the animal, **characterized in that** the cleaning and/or drying unit (28) can spray a fluid against the teats and that in a non-operative position the milking unit (29) and the cleaning and/or drying unit (28) are located opposite to one another on opposing lateral sides of the milking parlour (1), while, in turn, the milking unit (29) and the cleaning and/or drying unit (28) can be moved under the animal.

2. A device as claimed in claim 1, **characterized in that** in order to limit the freedom of movement of the animal, guide means (27) are provided in the milking parlour (1).

3. A device as claimed in claim 2, **characterized in that** the milking unit (29) and the cleaning and/or drying unit (28) in their non-operative position are located outside an area bounded by the guide means (27).

4. A device as claimed in claim 2 or 3, **characterized in that** the milking unit (29) and the cleaning and/or drying unit (28) are each supported by a support (17), the supports (17) being mounted outside an area bounded by the guide means (27).

5. A device as claimed in claim 4, **characterized in that** the supports (17) are mounted on the floor.

6. A device as claimed in claim 4 or 5, **characterized in that** the supports (17) are mounted in such a way that the milking unit (29) and the cleaning and/or drying unit (28) can approach the udder of the animal from a side of the milking parlour (1) between a foreleg and a hindleg of the animal.

7. A device as claimed in any one of the claims 4 - 6, **characterized in that** a support (17) comprises supporting arms (40, 41) hingeably connected to each other, one of said supporting arms (40) further being hingeably connected to a height adjustable support member mounted on the floor.

8. A device as claimed in claim 7, **characterized in that** the supporting arms (40, 41) are movable by means of a first, a second and a third electric motor (39, 47,38).

9. A device as claimed in claim 8, **characterized in that** the third electric motor (38) cooperates with a spindle (49) to realize the height adjustability of the supporting arms (40, 41).

10. A device as claimed in claim 8 or 9, **characterized in that** the electric motors (38, 39, 47) are controlled by the computer.

## Patentansprüche

1. Vorrichtung zum automatischen Melken von Tieren, wie z. B. Kühen, mit einem Melkstand (1) und einer rechnergesteuerten Melkeinheit (29) mit einem mit Zitzenbechern (52) versehenen Melkgeschirr, das automatisch an die Zitzen eines zu melkenden Tieres anschließbar ist, sowie mit einer rechnergesteuerten Reinigungs- und/oder Trocknungseinheit (28) für die Zitzen des Tieres,
**dadurch gekennzeichnet, daß** von der Reinigungs- und/oder Trocknungseinheit (28) eine Flüssigkeit auf die Zitzen zu sprühen ist, und daß die Melkeinheit (29) und die Reinigungs- und/oder Trocknungseinheit (28) in der Ruhelage auf gegenüberliegenden Längsseiten des Melkstandes (1) angeordnet sind, wobei die Melkeinheit (29) und die Reinigungs- und/oder Trocknungseinheit (28) nacheinander unter das Tier bewegbar sind.

2. Vorrichtung nach Anspruch 1,
**dadurch gekennzeichnet, daß** zur Begrenzung der Bewegungsfreiheit des Tieres eine Führung (27) in dem Melkstand (1) angeordnet ist.

3. Vorrichtung nach Anspruch 2,
**dadurch gekennzeichnet, daß** die Melkeinheit (29) und die Reinigungs- und/oder Trocknungseinheit (28) in ihrer Ruhelage außerhalb eines durch die Führung (27) begrenzten Bereiches angeordnet sind.

4. Vorrichtung nach Anspruch 2 oder 3,
**dadurch gekennzeichnet, daß** die Melkeinheit (29) und die Reinigungs- und/oder Trocknungseinheit (28) jeweils von einem Träger (17) gehalten sind, wobei die Träger (17) außerhalb eines Bereiches befestigt sind, der durch die Führung (27) begrenzt ist.

5. Vorrichtung nach Anspruch 4,
**dadurch gekennzeichnet, daß** die Träger (17) am Boden befestigt sind.

6. Vorrichtung nach Anspruch 4 oder 5,
**dadurch gekennzeichnet, daß** die Träger (17) derart befestigt sind, daß die Melkeinheit (29) und die Reinigungs- und/oder Trocknungseinheit (28) sich dem Euter des Tieres von einer Seite des Melkstandes (1) zwischen einem Vorderbein und einem Hinterbein des Tieres hindurch nähern können.

7. Vorrichtung nach einem der Ansprüche 4 bis 6,
**dadurch gekennzeichnet, daß** ein Träger (17) Tragarme (40, 41) aufweist, die schwenkbar miteinander verbunden sind, wobei einer der Tragarme (40) außerdem mit einem höhenverstellbaren, auf dem Boden angeordneten Stützglied schwenkbar verbunden ist.

8. Vorrichtung nach Anspruch 7,
**dadurch gekennzeichnet, daß** die Tragarme (40, 41) mit Hilfe eines ersten, eines zweiten und eines dritten Elektromotors (39, 47, 38) zu bewegen sind.

9. Vorrichtung nach Anspruch 8,
**dadurch gekennzeichnet, daß** der dritte Elektromotor (38) zur Erzielung der Hôhenverstellbarkeit der Tragarme (40, 41) mit einer Spindel (49) zusammenwirkt.

10. Vorrichtung nach Anspruch 8 oder 9,
**dadurch gekennzeichnet, daß** die Elektromotoren (38, 39, 47) vom Rechner gesteuert werden.

## Revendications

1. Dispositif pour traire automatiquement des animaux, tels que des vaches, comportant un box de traite (1) et une unité de traite commandée par ordinateur (29), ayant un point de traite avec des gobelets trayeurs (52), qui peut être relié automatiquement aux trayons d'un animal à traire, et une unité de nettoyage et/ou séchage commandée par ordinateur (28) destinée aux trayons de l'animal, **caractérisé en ce que** l'unité de nettoyage et/ou séchage (28) peut pulvériser un fluide contre les trayons, et **en ce que** dans une position inactive l'unité de traite (29) et l'unité de nettoyage et/ou séchage (28) sont situées opposées l'une à l'autre sur des côtés latéraux opposés du box de traite (1), alors que, à leur tour, l'unité de traite (29) et l'unité de nettoyage et/ou séchage (28) peuvent être déplacées sous l'animal.

2. Dispositif selon la revendication 1, **caractérisé en ce qu'**afin de limiter la liberté de déplacement de l'animal, des moyens de guidage (27) sont agencés dans le box de traite (1).

3. Dispositif selon la revendication 2, **caractérisé en ce que** l'unité de traite (29) et l'unité de nettoyage et/ou séchage (28), dans leur position inactive, sont positionnées à l'extérieur d'une zone délimitée par les moyens de guidage (27).

4. Dispositif selon la revendication 2 ou 3, **caractérisé en ce que** l'unité de traite (29) et l'unité de nettoyage et/ou séchage (28) sont chacune supportées par un support (17), les supports (17) étant montés à l'extérieur d'une zone délimité par les moxens de guidag (7).

5. Dispositif selon la revendication 4, caractérisé cri ce que les supports (17) sont montés sur le sol,

6. Dispositif selon la revendication 4 ou 5, **caractérisé en ce que** les supports (17) sont montés de manière telle que l'unité de traite (29) et l'unité de nettoyage et/ou séchage (28) peuvent approcher du pis de l'animal à partir d'un côté du box de traite (1) entre une patte avant et une patte arrière de l'animal.

7. Dispositif selon l'une quelconque des revendications 4 à 6, **caractérisé en ce qu'**un support (17) comporte des bras de support (40, 41) reliés de manière articulée l'un à l'autre, un desdits bras de support (40) étant en outre relié de manière articulée à un élément de support ajustable en hauteur monté sur le sol.

8. Dispositif selon la revendication 7, **caractérisé en ce que** les bras de support (40, 41) peuvent être déplacés par l'intermédiaire d'un premier, un deuxième et un troisième moteur électrique (39, 47, 38).

9. Dispositif selon la revendication 8, **caractérisé en ce que** le troisième moteur électrique (38) coopère avec une broche (49) pour obtenir la capacité de réglage en hauteur des bras de support (40, 41).

10. Dispositif selon la revendication 8 ou 9, **caractérisé en ce que** les moteurs électriques (38, 39, 47) sont commandés par l'ordinateur.
